# EUROPÄISCHE PATENTSCHRIFT

(11) **EP 1 184 771 B1**
(45) Veröffentlichungstag und Bekanntmachung des Hinweises auf die Patenterteilung: **04.08.2004**
(21) Anmeldenummer: 00118372.2
(22) Anmeldetag: 24.08.2000
(51) Int. Cl.: G06F 1/00

(54) **Verfahren zum Schutz von Computer-Software und/oder computerlesbaren Daten sowie Schutzgerät**
Method and device for protection of computer software and/or computer-readable data
Méthode et dispositif de protection de logiciels d'ordinateur et/ou données lisibles par un ordinateur

(43) Veröffentlichungstag der Anmeldung: 06.03.2002
(73) Patentinhaber: Wibu-Systems AG, 76137 Karlsruhe (DE)
(72) Erfinder: Buchheit, Marcellus, 76133 Karlsruhe (DE); Winzenried, Oliver, 76137 Karlsruhe (DE)
(74) Vertreter: Durm, Frank, Dipl.-Ing.

(56) Entgegenhaltungen:
- WO-A-98/42098
- US-A- 5 473 692
- US-A- 5 757 907
- US-A- 5 987 134
- BUCHHEIT M: "SOFTWARE-KOPIERSCHUTZ" ELEKTRONIK,DE,FRANZIS VERLAG GMBH. MUNCHEN, Bd. 41, Nr. 14, 7. Juli 1992 (1992-07-07), Seiten 68-74, XP000307635 ISSN: 0013-5658

## Beschreibung

Die Erfindung betrifft ein Verfahren zum Schutz von Computer-Software und/oder computerlesbaren Daten gegen unberechtigte Nutzung sowie ein Schutzgerät zur Verwendung bei einem solchen Verfahren.

Computer-Software, Dokumente und Daten mit Inhalt, die gegen illegale Verbreitung geschützt werden sollen, werden überwiegend individuell als Paket verkauft. Gegen unberechtigte Nutzung, wozu insbesondere Raubkopien gehören, werden teilweise technische Maßnahmen eingesetzt, bei denen es sich entweder um reine Software-Lösungen oder um einen Hardwareschutz, sogenannten Dongle handelt.

Problematisch bei jeder Art von Sicherheitsmaßnahmen gegen unberechtigte Nutzung ist, dass für jedes Produkt spezielle, individuell darauf abgestimmte Sicherheitsmaßnahmen erforderlich sind. Neue Distributionswege wie ESD (Electronic Software Distribution), zum Beispiel über das Internet, werden dadurch erheblich erschwert, da zusammen mit dem geschützten Computerprogramm bzw. den geschützten Daten stets individuelle Hard- oder Software erstellt und mitgeliefert werden muss. Beim Lizenzgeber fallen deshalb zusätzliche Kosten allein für die Sicherheitsmaßnahmen an. Der Lizenznehmer hat einen einmaligen Anschaffungspreis und geht das Risiko ein, eine Fehlinvestition zu tätigen. Eine Zahlung nach Nutzungsintensität ist nicht üblich, da technisch nicht messbar.

Die heute verfügbaren hochwertigen Verfahren zum Schutz von Software, basierend auf Verschlüsselung von Dokumenten, Programmcode oder Resourcen, reichen für zukünftige Sicherheitsanforderungen, insbesondere bei weit verbreiteter und entsprechend preisgünstiger Software, sowie zu deren sicherer nutzungsabhängiger Abrechnung nicht aus.

Die aktuell verfügbaren Private Key Tokens, die zur Authentifizierung verwendet werden und Zertifikate speichern können, zum Beispiel gemäß ITU-Norm X.509v3, genügen zwar hohen Sicherheitsansprüchen, erlauben aber nur das Speichern einiger weniger Zertifikate. Auch die gleichzeitige Nutzung vieler unterschiedlich geschützter Programme oder Daten mit individueller Verschlüsselung und Abrechnung ist hier nicht vorgesehen.

Weil jedes individuelle Software-Produkt ein eigenes Schutzverfahren erfordert, das in jedem Fall mit erheblichen Zusatzkosten verbunden ist, wird nach wie vor der überwiegende Teil von Computer-Software und/oder computerlesbaren Daten ohne wirksamen Kopierschutz verbreitet. Den Urhebern bzw. Lizenzgebern entgehen somit große Summen nicht bezahlter Lizenzgebühren.

Für den zukünftigen Einsatz vieler unterschiedlicher Computer-Programme bzw. computerlesbarer Daten, insbesondere auch von unterschiedlichen Lizenzgebern sowie unter Ausnutzung neuer Online-Vertriebswege, sind deshalb neue Schutzverfahren erforderlich, die den Lizenzgebern ihre Einnahmen sichern und erhöhten Sicherheitsanforderungen entsprechen.

Die US 5 826 011 beschreibt eine als Hardware ausgebildete elektronische Sicherheitseinrichtung zum Schutz von Computer-Software bei der Installation, welche an den Computer des Benutzers angeschlossen wird. Diese elektronische Sicherheitseinrichtung enthält verschiedene geheime Installationsdaten, welche bei der Installation des geschützten Programms benötigt werden.

Die US 5 805 802 beschreibt ein Modul für den Schutz von Software in einem Computernetzwerk, umfassend einen Mikroprozessor zur Implementierung eines kontrollierten Zugangs zu der Software, eine Schnittstelle zur Verbindung mit einem Netzwerk-Server, einen programmierbaren Speicher, in den ein Nutzungsbegrenzungs-Code eingespeichert wird, sowie eine Vorrichtung zur Verarbeitung dieses Nutzungsbegrenzungs-Codes und einer aktuellen Benutzernummer.

Die WO 00/20948 beschreibt ein Kopierschutzsystem, das ein Signaturverfahren mit einem variable Schlüssel benutzenden Codier- bzw. Verschlüsselungsverfahren kombiniert.

Die US 5 473 692 beschreibt eine integrierte Schaltkreiskomponente zur Verwaltung einen Softwarelizenz sowie ein Verfahren zur Verteilung dieser Softwarelizenz.

Schließlich beschreibt die vom Anmelder selbst stammende Firmendruckschrift "WIBU-KEY - Das überzeugende Konzept zum Thema Kopierschutz", herausgegeben 1999 von WIBU-SYSTEMS AG, ein als Hardware-Zusatz ausgebildetes Schutzgerät zum Anschluß an den Computer des Lizenznehmers einer kopiergeschützten Software. Hier kommt ein Verfahren zum Einsatz, bei dem die zu schützende Software beim Lizenzgeber verschlüsselt und beim Lizenznehmer wieder entschlüsselt wird. Die Verschlüsselung hängt von drei Parametern ab: Dem Firm Code, der vom Hersteller vorgegeben und für jeden Lizenzgeber individuell nur einmal vergeben wird; dem User Code, den der Lizenzgeber frei festlegen kann; schließlich dem Selection Code, welcher zur Auswahl einer von über 4 Milliarden Verschlüsselungsvarianten für jeden Lizenzeintrag dient. Der Firm Code und der User Code werden vom Lizenzgeber in das Schutzgerät einprogrammiert. Der Selection Code wird bei der Initialisierung der Verschlüsselung an das in der Verfügungsgewalt des Lizenznehmers befindliche Schutzgerät gesendet und nicht gespeichert. Der Selection Code ist, vom Lizenzgeber vorbereitet, in den geschützten Daten oder der geschützten Software enthalten.

Nachteilig bei dem zuletzt genannten Schutzverfahren ist, dass der Linzenzgeber auf einen vom Hersteller des Verfahrens bzw. des Schutzgeräts (Box) fest vorgegebenen Firmenschlüssel (Firm Code) angewiesen ist. Hierdurch entsteht eine gewisse Abhängigkeit des Lizenzgebers vom Hersteller des Verfahrens bzw. der Box, was einerseits den Lizenzgeber einschränkt und andererseits aus der Sicht des Lizenzgebers zu einer noch nicht optimalen Sicherheit führt. Ein wesentlicher Nachteil ist ferner, dass jeder Lizenzgeber einen bestimmten, fest vorgegebenen Firm Code benötigt, was beim Lizenznehmer, also dem Endkunden der Software, dazu führen kann, dass er bei der Benutzung von Software verschiedener Lizenzgeber gleich mehrere Schutzgeräte einsetzen muss.

Der Erfindung liegt somit das technische Problem zugrunde, ein verbessertes System zum Schutz von Computer-Software und/oder computerlesbaren Daten gegen unberechtigte Nutzung zur Verfügung zu stellen, das es ermöglicht, gleichzeitig für viele Lizenzgeber für jeweils viele Produkte unabhängig voneinander genutzt werden kann.

Bei der Lösung dieser Aufgabe wird ausgegangen von einem Verfahren gemäß dem Oberbegriff des ersten Patentanspruchs, bei dem die Software bzw. Daten des Lizenzgebers durch individuelle Verschlüsselung in Abhängigkeit von Lizenzparametern geschützt wird.

Gelöst wird die Aufgabe gemäß dem kennzeichnenden Teil des ersten Patentanspruchs dadurch, dass die Verschlüsselung der Software bzw. Daten beim Lizenzgeber initialisiert wird in Abhängigkeit eines vom Lizenzgeber frei gewählten geheimen Firm Key, dass die Verschlüsselung der Übertragung der Lizenzparameter vom Lizenzgeber an den Lizenznehmer in Abhängigkeit eines geheimen Private Serial Key erfolgt, und dass die Entschlüsselung der geschützten Software bzw. Daten beim Lizenznehmer initalisiert wird in Abhängigkeit des vom Lizenzgeber gewählten Firm Key.

Der Vorteil des erfindungsgemäßen Verfahrens besteht insbesondere darin, dass viele voneinander unabhängige Lizenzparameter, die von unterschiedlichen Lizenzgebern für jeweils unterschiedliche Software bzw. Daten stammen, benutzt werden können, wobei durch die Verwendung des geheimen Private Serial Key für die verschlüsselte Übertragung der Lizenzparameter sichergestellt ist, dass das Anlegen, Modifizieren und Löschen von Lizenzparametern nur bei dem einen Lizenznehmer erfolgen kann und nicht etwa bei anderen Lizenznehmern, da dort nicht der identische geheime Private Serial Key SK vorhanden ist. Aus diesem Grund ist auch eine Manipulation der Lizenzparameter nicht möglich, denn diese können nicht entschlüsselt werden. Hierdurch wird es möglich, die Lizenzparameter auf unsicheren Übertragungswegen, zum Beispiel über das Internet, durchzuführen, ohne dass damit eine Einbuße an Sicherheit für den Lizenzgeber verbunden wäre.

Ein weiterer großer Vorteil des erfindungsgemäßen Verfahrens besteht darin, dass der Lizenznehmer einer kopiergeschützten Software, also der Endkunde, nur noch ein einziges Verfahren einsetzen muss, selbst wenn er eine Vielzahl unterschiedlicher Software von mehreren verschiedenen Lizenzgebern benutzen will. Dies senkt nicht nur die Kosten des Kopierschutzes sowohl für den Lizenzgeber als auch den Lizenznehmer erheblich, sondern erhöht insbesondere auch die Akzeptanz beim Lizenznehmer.

Die Sicherheit des Verfahrens für den Lizenzgeber wird weiter erhöht, wenn der geheime Private Serial Key beim Lizenznehmer zufällig erzeugt wird, und zwar ohne dass der Lizenzgeber, der Lizenznehmer oder irgendein Anderer darauf Einfluss nehmen kann.

Bevorzugt ist dem Lizenznehmer eine einzigartige Serial Number fest zugeordnet und erfolgt die Signatur der Übertragung der Lizenzparameter vom Lizenzgeber zum Lizenznehmer in Abhängigkeit dieser Serial Number.

In vorteilhafter Weiterbildung des erfindungsgemäßen Verfahrens wird jedem Lizenzgeber vom Hersteller des Verfahrens ein geheimer Firm Common Key zugeordnet. Dieser wird durch eine Verschlüsselung in Abhängigkeit des Firm Codes des jeweiligen Lizenzgebers aus einem geheimen Common Key berechnet, welcher auch dem Lizenzgeber nicht bekanntgegeben wird. Jeder Lizenzgeber erhält nur den Firm Common Key, der zu seinem Firm Code passt. Der Firm Common Key wird zur Verifizierung des Anlegens, Ändern oder Löschens von Lizenzparametem benötigt.

Bevorzugt erfolgt die Speicherung der Lizenzparameter innerhalb eines als Hardware-Zusatz ausgebildeten Schutzgeräts (Box), welches an eine Schnittstelle des Computers des Lizenznehmers angeschlossen ist. Dieses Schutzgerät enthält den zur automatischen Entschlüsselung der geschützten Software bzw. Daten erforderlichen Entschlüsseler.

Um Computer-Software oder computerlesbare Daten nicht nur gegen unberechtigte Nutzung zu sichern, sondern deren Nutzung in Abhängigkeit von der Intensität der Nutzung abzurechnen, kann ein Begrenzer beim Lizenznehmer vorgesehen werden, welcher den Zeitraum und/oder die Anzahl der Entschlüsselungen der geschützten Software bzw. Daten begrenzt. Hierzu können optional von einer Referenzquelle manipulationssicher eine Datums- und/oder Zeitinformation an den Lizenznehmer übergeben werden. Vorzugsweise ist dieser Begrenzer ebenfalls Bestandteil des Schutzgeräts.

In weiterer vorteilhafter Ausgestaltung des erfindungsgemäßen Verfahrens wird in das Schutzgerät ein vom Hersteller festgelegter geheimer Private Box Key eingespeichert, welcher einen Public Box Key zur Verfügung stellt. Der Hersteller stellt außerdem eine Liste gültiger Public Box Keys zur Verfügung. Der Private Box Key ist nicht abhängig von Lizenznehmer und Lizenzgeber und kann deshalb für Software bzw. Daten verschiedener Lizenzgeber verwendet werden. Der aus dem Private Box Key berechnete Public Box Key wird zur Verschlüsselung der Übertragung der Lizenzparameter zwischen Lizenzgeber und Lizenznehmer verwendet. Druch Prüfung des Public Box Keys auf Gültigkeit wird verhindert, dass ein Angreifer einen beliebigen Public Box Key liefert, den er aus einem ungültigen, von ihm gewählten Private Box Key ermittelt hat und damit die vom Lizenzgeber übertragenen Daten entschlüsseln kann.

Bei der auf eine Vorrichtung gerichteten Aufgabe wird ausgegangen von einem Schutzgerät gemäß dem Oberbegriff des Patentanspruchs 9. Gelöst wird die Aufgabe dadurch, dass das Schutzgerät eine Einrichtung enthält, welche einen zufälligen geheimen Private Serial Key zur Verschlüsselung der Übertragung der Lizenzparameter zwischen Lizenzgeber und Lizenznehmer enthält.

Umfasst der Speicher im Schutzgerät mehrere Speicherbereiche für die Einspeicherung von Lizenzparametern verschiedener Lizenzgeber, so kann dasselbe Schutzgerät vom Lizenznehmer im Zusammenhang mit Software bzw. Daten einer Vielzahl unterschiedlicher Lizenzgeber benutzt werden.

Ein besonders hohes Maß an Sicherheit für den Lizenzgeber lässt sich dadurch erreichen, dass der Mikroprozessor, der Speicher für die Lizenzparameter, der Entschlüsseler sowie die Einrichtung zur Erzeugung des Private Serial Key auf einem einzigen integrierten Halbleiterschaltkreis, insbesondere einem ASIC (Application Specific Integrated Circuit), ausgebildet sind. Hierdurch wird insbesondere verhindert, dass der Speicher mit den eingespeicherten Lizenzparametern direkt manipuliert werden kann.

Eine nutzungsabhängige Abrechnung mit dem Lizenzgeber wird möglich, wenn das Schutzgerät zusätzlich einen manipulationssicheren Begrenzer enthält, welcher den Zeitraum und/oder die Anzahl der Entschlüsselungen der geschützten Software bzw. Daten begrenzt.

Ein Ausführungsbeispiel der Erfindung wird nachstehend anhand der beigefügten Abbildungen und Listen näher erläutert. Es zeigen:
- Fig. 1: ein Verfahren zum Schutz von Computer-Software und/oder computerlesbaren Daten einschließlich Abrechnung deren Nutzung unter Verwendung eines als Hardware-Zusatz ausgebildeten Schutzgeräts, in einem Prinzipbild;
- Fig. 2a: die Schlüssel und Daten beim Hersteller des Verfahrens und des Schutzgeräts gemäß Fig. 1;
- Fig. 2b: die Schlüssel und Daten beim Lizenzgeber;
- Fig. 3: die Schlüssel und Daten beim Lizenznehmer;
- Fig. 4: das Anlegen eines Lizenzparameters durch einen neuen Lizenzgeber, in einem Ablaufdiagramm;
- Fig. 5: das Löschen eines Lizenzparameters, in einem Ablaufdiagramm;
- Fig. 6: das Anlegen, Ändern oder Löschen eines Lizenzparameters, in einem Ablaufdiagramm;
- Fig. 7: das Initialisieren einer Entschlüsselung beim Lizenznehmer, in einem Ablaufdiagramm;
- Fig. 8: das Setzen eines Verfallsdatums von einer zugelassenen Referenzquelle, in einem Ablaufdiagramm.

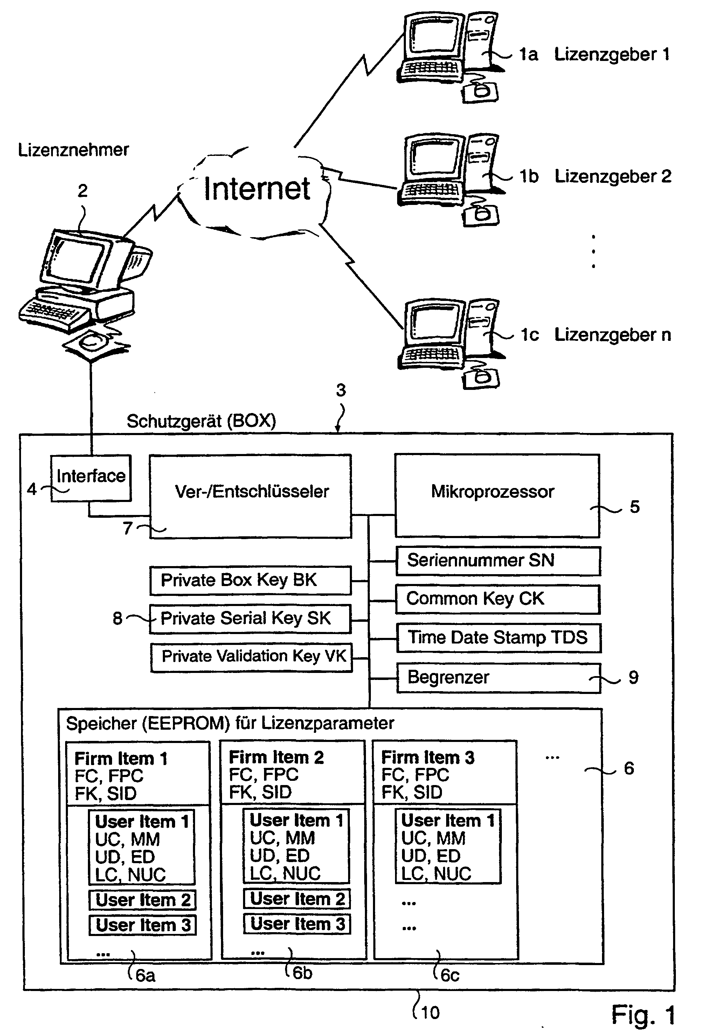

Das in Figur 1 schematisch dargestellte Verfahren ermöglicht sowohl den Schutz als auch die nutzungsabhängige Abrechnung von Computer-Software und/oder computerlesbaren Daten einer Vielzahl von Lizenzgebern 1, 2 bis n. Die Software bzw. Daten sind zunächst auf Servern der Lizenzgeber gespeichert und können über das Internet auf den Computer eines Lizenznehmers übertragen werden (Download).

An dem Computer des Lizenznehmers ist ein als Hardware-Zusatz ausgebildetes Schutzgerät (Box) 3, das über eine Schnittstelle (Interface) 4 an den Computer 2 des Lizenznehmers angeschlossen ist.

Das Schutzgerät 3 enthält einen Mikroprozessor 5, einen nichtflüchtigen Speicher (EEPROM) mit mehreren Speicherbereichen 6a, 6b, 6c, deren Anzahl der Anzahl der Lizenzgeber 1, 2 bis n entspricht.

Das Schutzgerät 3 enthält ferner einen Ver- und Entschlüsseler 7 sowie eine Einrichtung 8 zur Erzeugung eines zufälligen geheimen Private Serial Key SK. Es ist ferner ein Begrenzer 9 zur Begrenzung des Zeitraums und/oder der Anzahl der Entschlüsselung der geschützten Software bzw. Daten vorgesehen.

Alle wesentlichen Teile des Schutzgeräts 3, also insbesondere der Mikroprozessor 5, der Speicher 6, der Ver- und Entschlüsseler 7 sowie die Einrichtung 8 zur Erzeugung des Private Serial Key SK, sind auf einem einzigen integrierten Halbleiterschaltkreis, einem sogenannten ASIC (Application Specific Integrated Circuit) ausgebildet, welcher von einem stabilen Gehäuse 10, beispielsweise aus Kunststoff, umgeben ist.

Im folgenden wird nun beschrieben, welche Schlüssel und Daten beim Hersteller, beim Lizenzgeber bzw. beim Lizenznehmer erzeugt und gespeichert werden, und ob diese geheim oder öffentlich sind.

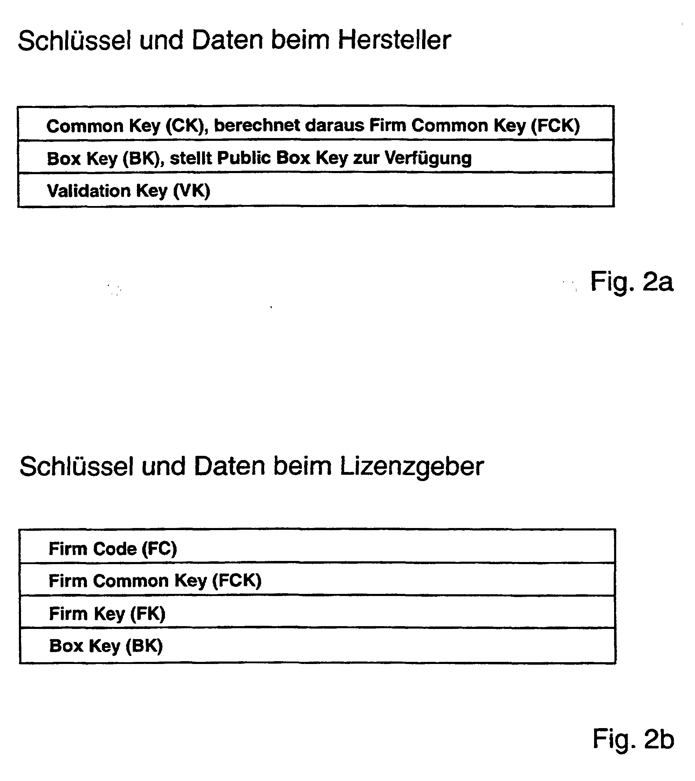

Die Liste von Figur 2a enthält die Schlüssel und Daten beim Hersteller des Verfahrens und des Schutzgeräts. Diese umfasst einen geheimen Common Key (CK), welcher zur Erzeugung eines geheimen Firm Common Key (FCK) für einen bestimmten Lizenzgeber verwendet wird. Der Hersteller wählt ferner einen Private Box Key (BK), der geheim ist und einen daraus abgeleiteten Public Box Key zur Verfügung stellt. Der Private Box Key (BK) ist unabhängig vom Lizenznehmer und kann für die Benutzung des Verfahrens mit jedem Lizenzgeber identisch sein. Der Public Box Key wird zur Verschlüsselung der Sequenz für das Anlegen oder Löschen von Lizenzparametern verwendet, welche von einem Lizenzgeber zum Lizenznehmer übertragen werden. Nicht unbedingt notwendig ist ein vom Hersteller gewählter geheimer Private Validation Key (VK). Der zugehörige Public Validation Key wird beim Hersteller gespeichert. Der Lizenzgeber kann entscheiden, ob die Funktionalität mit dem Validation Key (VK) genutzt werden soll oder nicht. Der Validation Key (VK) wird dazu verwendet, um Referenzinformationen, wie zum Beispiel aktuelles Datum und Uhrzeit, manipulationssicher verschlüsselt von einer Referenzquelle, z.B. einem Trust-Center, zum Lizenznehmer zu übertragen.

Gemäß der Liste von Figur 2b verfügt ein Lizenzgeber über den ihm vom Hersteller bereitgestellten öffentlichen Firm Code (FC). Der geheime Firm Common Key (FCK) wird vom Hersteller dem Lizenzgeber für seinen Firm Code (FC) bereitgestellt. Der Lizenzgeber kann seinen eigenen geheimen Firm Key (FK) unabhängig vom Hersteller frei festlegen. Der Firm Key (FK) wird als geheimer Schlüssel für das Anlegen und Ändern der Lizenzparameter des Lizenzgebers verwendet, sowie als geheimer Schlüssel für die Erzeugung einer Verschlüsselungssequenz. Der Lizenzgeber verfügt ferner über den vom Hersteller bereitgestellten Public Box Key (BKp).

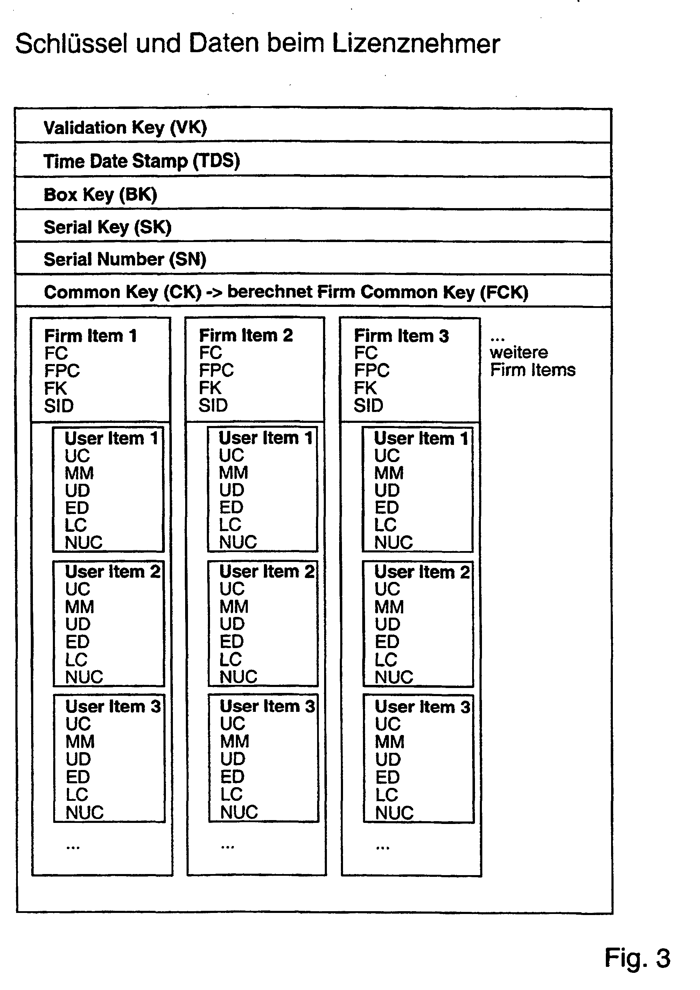

Die Liste von Figur 3 enthält die Schlüssel und Daten, welche im Schutzgerät (3, vgl. Fig. 1) beim Lizenznehmer enthalten sind. Hierzu gehört zunächst ein geheimer einzigartiger Private Validation Key (VK), der vom Hersteller des Schutzgeräts 3 gewählt wurde.

Eine Datums- und Zeitinformation (Time Date Stamp, TDS) kann optional von einer Referenzquelle manipulationssicher an den Lizenznehmer übergeben werden. Hierzu wird der Validation Key (VK) benötigt. Beim Lizenznehmer befindet sich auch der geheime Private Box Key (BK), dessen Public Box Key (BKp) vom Hersteller des Schutzgeräts öffentlich bereitgestellt wurde.

Besonders wichtig für die Sicherheit ist der beim Lizenznehmer zufällig erzeugte Private Serial Key (SK), der völlig unabhängig sowohl vom Hersteller wie auch von einem Lizenzgeber ist. Dieser Private Serial Key (SK) stellt einen Public Serial Key (SKp) zur Verfügung, welcher zur Verschlüsselung der Datenübertragung zwischen Lizenzgeber und Lizenznehmer verwendet wird.

Der Lizenznehmer verfügt ferner über die einzigartige Serial Number (SN) sowie den geheimen Common Key (CK), aus dem durch eine Verschlüsselung in Abhängigkeit des Firm Code (FC) der Firm Common Key (FCK) berechnet wird.

Der Speicher 6 des Schutzgerätes 3 beim Lizenznehmer (vgl. Fig. 1) enthält in den hier beispielhaft dargestellten drei Speicherbereichen 6a, 6b und 6c die zur Benutzung der geschützten Software bzw. Daten benötigten Lizenzparameter. Diese bestehen aus je einem Firm Item (FI) für jeden Lizenzgeber und einem oder mehreren User Items, die jeweils einem Firm Item zugeordnet sind.

Die Firm Items 1, 2 und 3 bestehen jeweils aus dem Firm Code (FC) des jeweiligen Lizenzgebers, einem Firm Programming Counter (FPC), dem geheimen Firm Key (FK) des betreffenden Lizenzgebers sowie einem öffentlichen temporären Session ID (SID).

Die mehreren, jeweils einem Firm Item zugeordneten User Items umfassen jeweils einen User Code (UC), einen Master Mask (MM) für die variable Verfügbarkeit für verschiedene Programm-Module, -Funktionen etc., ferner User Data (UD), ein Verfallsdatum (Expiration Date, ED), einen Begrenzungszähler (Limit Counter, LC) sowie einen Netzwerk-Benutzerzähler (NUC).

Nachfolgend werden nun die sicherheitsrelevanten Schritte bei der Anwendung des Verfahrens sowie die Übertragung der Schlüssel und Daten zwischen Lizenzgeber und Lizenznehmer auf einem öffentlichen Übertragungsweg, wie dem Internet, beschrieben.

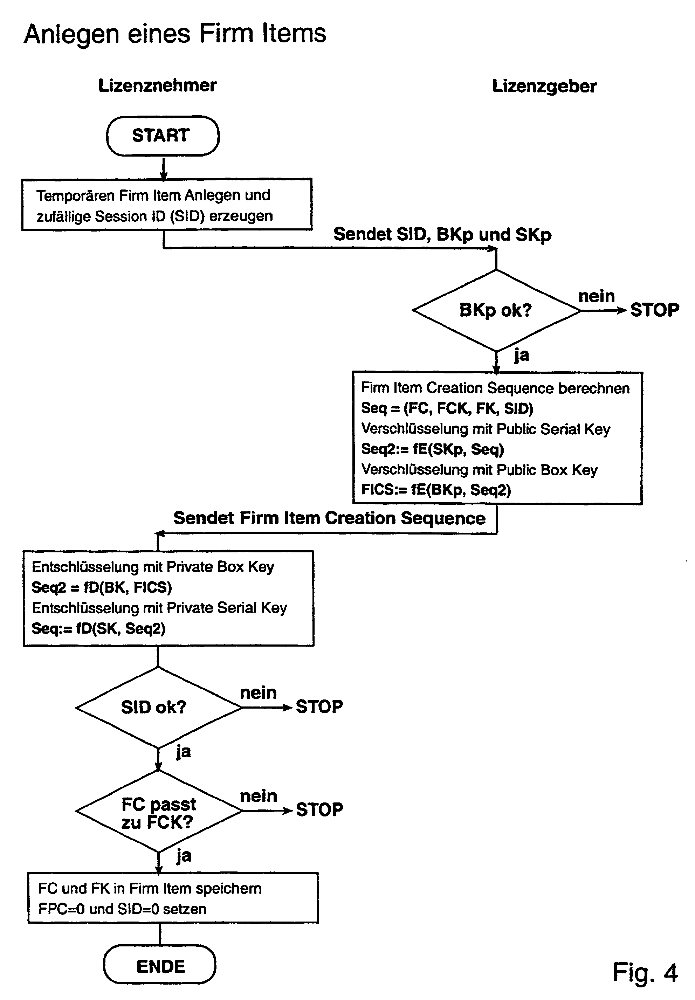

Der Lizenznehmer benötigt zur Benutzung der geschützten Software bzw. Daten gültige Lizenzparameter, umfassend ein Firm Item und ein User Item. Das Ablaufdiagramm von Figur 4 verdeutlicht das Anlegen eines neuen Firm Item beim Lizenznehmer.

Zunächst wird im Schutzgerät des Lizenznehmers ein temporärer Firm Item angelegt und eine zufällige Session ID (SID) erzeugt. Diese Session ID (SID), der betreffende Public Box Key (BKp) sowie der aus dem Serial Key (SK) abgeleitete Public Serial Key (SKp) werden anschließend über das Internet zum Lizenzgeber gesendet, um eine Firm Creation Sequence zu erhalten. Die Verwendung der zufälligen Session ID (SID) verhindert, dass ein einmal durchgeführter Vorgang des Anlegens eines Lizenzparameters beim gleichen Lizenznehmer zu einem späteren Zeitpunkt wiederholt werden kann.

Der Lizenzgeber prüft nun, ob der vom Lizenznehmer empfangene Public Box Key (BKp) zulässig ist. Dieser Vergleich erfolgt mit einer Liste der gültigen Public Box Keys (BKp), welcher der Lizenzgeber vom Hersteller des Schutzgeräts erhalten hat. Ohne diese Authentifizierung könnte ein Angreifer beliebige Public Keys zum Lizenzgeber übertragen, zu denen er die Private Keys hat und dann den in der Firm Item Creation Sequence enthaltenen geheimen Firm Key (FK) des Lizenzgebers erfahren.

Der Lizenzgeber berechnet nun eine Sequenz, die aus Firm Code (FC), Firm Common Key (FCK) und dem von ihm gewählten Firm Key (FK) und der zuvor erhaltenen Session ID (SID) besteht. Diese Sequenz wird im ersten Schritt mit dem Public Serial Key (SKp) verschlüsselt, der zuvor vom Lizenznehmer übertragen wurde. Dies stellt sicher, dass die Sequenz nur von diesem Lizenznehmer entschlüsselt werden kann, da niemand anderes über den zugehörigen Private Serial Key (SK) verfügt.

Die so verschlüsselte Sequenz wird im nächsten Schritt mit dem Public Box Key (BKp) verschlüsselt. Nur der Lizenznehmer verfügt über den Private Box Key (BK), um die Sequenz wieder zu entschlüsseln. Dies stellt sicher, dass kein Unbefugter die Sequenz entschlüsseln kann, da er nicht den zur Entschlüsselung notwendigen Private Box Key (BK) kennt. Die so verschlüsselte Firm Item Creation Sequence wird dann über das Internet zum Lizenznehmer übertragen.

Im Schutzgerät des Lizenznehmers wird die empfangene Firm Item Creation Sequence mit dem Private Box Key (BK) entschlüsselt. Der Private Box Key (BK) ist geheim und nur dem Hersteller des Schutzgerätes bekannt. Deshalb ist sichergestellt, dass kein potentieller Angreifer die Firm Item Creation Sequence, die den geheimen Firm Key (FK) des Lizenzgebers enthält, entschlüsseln kann.

Die bisher nur halb entschlüsselte Firm Item Creation Sequence wird vollends entschlüsselt mit dem Private Serial Key (SK). Der Private Serial Key (SK) wurde in dem Schutzgerät beim Lizenznehmer zufällig erzeugt und ist somit niemandem zugänglich. Deshalb ist die Entschlüsselung der Sequenz äußerst wirksam geschützt. Andere Lizenznehmer bzw. deren Schutzgeräte können die Sequenz nicht entschlüsseln; dies ist noch nicht einmal dem Hersteller des Schutzgeräts möglich.

Im weiteren wird nun geprüft, ob bereits ein temporärer Firm Item mit der in der Firm Item Creation Sequence enthaltenen Session ID (SID) angelegt wurde, und ob der Firm Code (FC) zum Firm Common Key (FCK) passt. Falls nicht, wird der Firm Item nicht angelegt. Wenn ja, wird aus dem temporären Firm Item nun ein dauerhafter und benutzbarer Firm Item. Der Firm Code (FC) und der geheime Firm Key (FK) werden im Schutzgerät des Lizenzgebers gespeichert. Gleichzeitig wird ein Firm Programming Counter auf Null gesetzt.

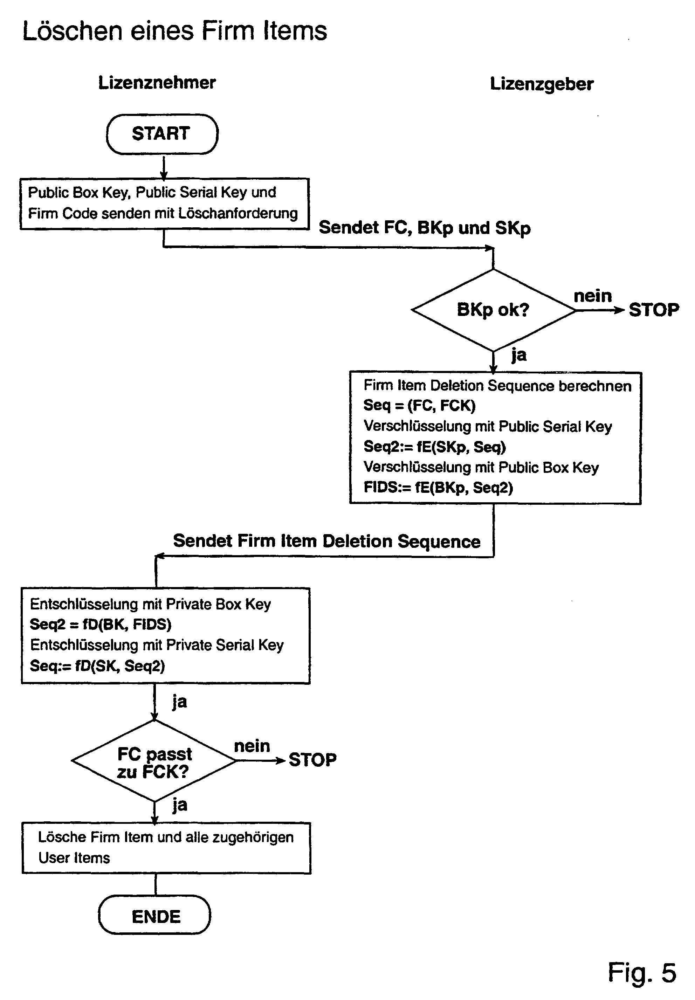

Das Ablaufdiagramm von Figur 5 verdeutlicht, wie ein Firm Item aus dem Speicher des Schutzgeräts des Lizenznehmers wieder gelöscht wird. Das Löschen eines Firm Items ist nicht sicherheitsrelevant. Für den Lizenznehmer ist es jedoch wichtig, dass das Löschen eines Firm Items nicht unbeabsichtigt oder durch einen Unbefugten erfolgen kann.

Zur Vervollständigung der zu einer bestimmten Software gehörenden Lizenzparameter muss zu dem Firm Item ein User Item hinzugefügt werden. Dieser User Item enthält beim Anlegen mindestens den User Code (UC). Optional kann der User Item eine Master Mask (MM), einen Begrenzungszähler, ein Verfallsdatum, einen Netzwerk-Benutzerzähler (NUC) oder weitere hinzugefügte Daten enthalten. Das Ändern eines User Items geschieht durch das Modifizieren bestehender Teile oder das Hinzufügen von neuen Elementen.

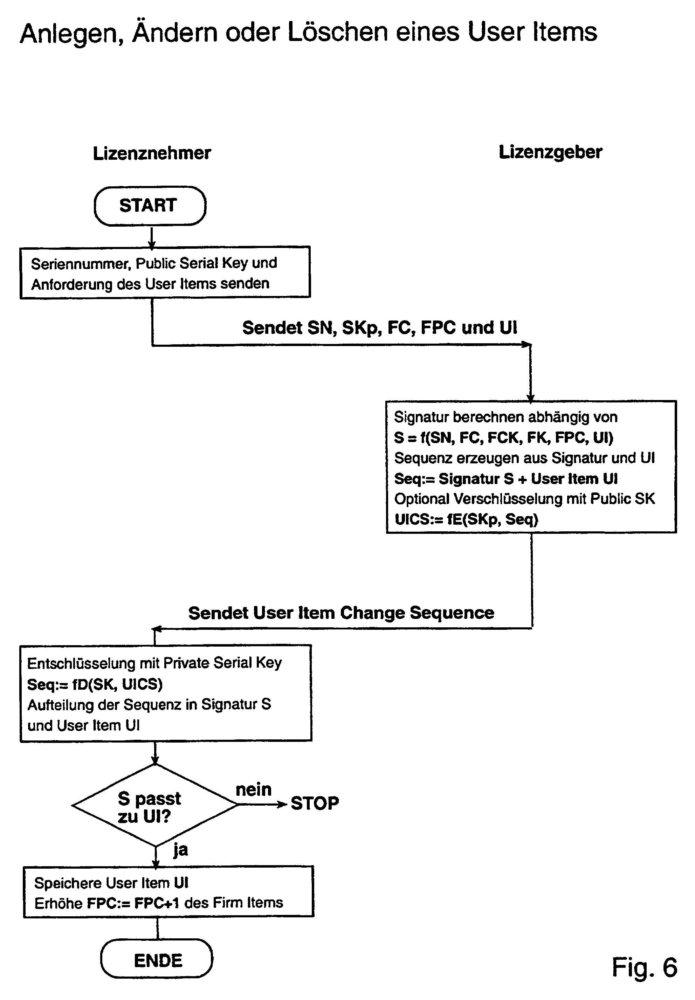

Figur 6 verdeutlicht die wesentlichen Schritte zum Anlegen, Ändern oder Löschen eines User Items mittels einer User Item Change Sequence (UICS).

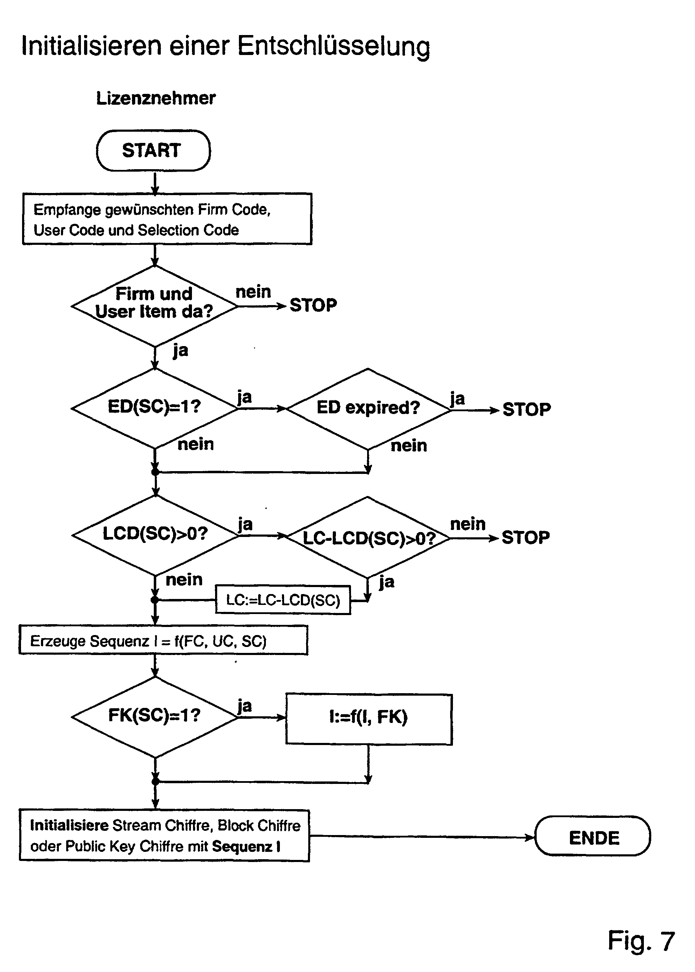

Damit der Lizenznehmer von der ihm durch den Lizenzgeber eingeräumten Berechtigung Gebrauch machen und eine geschützte Computer-Software und/oder geschützte computerlesbare Daten verwenden kann, muss eine Entschlüsselung beim Lizenznehmer initialisiert werden. Den Ablauf verdeutlicht Figur 7.

Zur Erzeugung einer Entschlüsselungssequenz werden folgende Schlüsssel bzw. Daten benötigt: Firm Code (FC), User Code (UC), Firm Key (FK) sowie ein als Parameter von der geschützten Software gelieferter Selection Code.

Je nach gewähltem Selection Code wird das Verfallsdatum geprüft und/oder der Begrenzungszähler um einen bestimmten Wert reduziert. Die Entschlüsselung kann nur initialisiert und korrekt durchgeführt werden, wenn gültige Lizenzparameter vorhanden sind, die den entsprechenden Firm Code (FC) und User Code (UC) enthalten und deren Begrenzungszähler oder Verfallsdatum nicht abgelaufen ist.

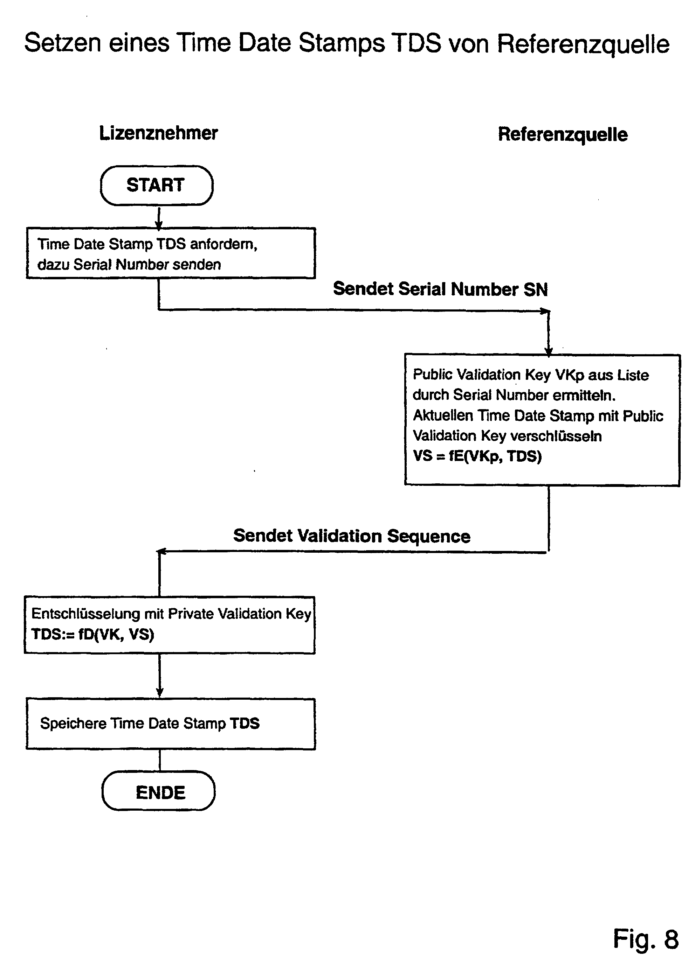

Das Ablaufdiagramm von Figur 8 erläutert das Setzen einer validierten Zeit/Datumsinformatin (Time Date Stamp, TDS). Diese Information kann nicht manipuliert werden. Der Begrenzer (9) nutzt diese Information zur Begrenzung des Zeitraums der Nutzung der geschützten Software bzw. Daten durch den Lizenznehmer.

Um eine gültige Referenzzeit zur Prüfung der Verfallsdaten zu setzen, wird von einer befugten sicheren Stelle, die über die Serial Number (SN) und den Public Validation Key (VKp) verfügt, eine Referenzzeit nach Datum und Uhrzeit, die mit dem Public Validation Key (VKp) beim Lizenznehmer verschlüsselt ist, setzt. Nur der Lizenznehmer verfügt über den Private Validation Key (VK) und kann diese Zeitreferenz entschlüsseln. Damit ist sichergestellt, dass die Referenzzeit nicht von einem Unbefugten geändert werden kann. Außerdem kann die befugte Stelle damit das komplette Verfahren beim Lizenznehmer sperren, falls dies vom Lizenzgeber als Option eingesetzt wird, zum Beispiel bei Mißbrauch durch den Lizenznehmer.

### Zusammenstellung der Bezugszeichen zu Fig. 1

- 1: 1a, 1b, 1c Server der Lizenzgeber
- 2: Computer des Lizenznehmers
- 3: Schutzgerät
- 4: Schnittstelle
- 5: Mikrocomputer
- 6: Speicher
- 6a, 6b, 6c: Speicherbereiche (von 6)
- 7: Ver-/Entschlüsseler
- 8: Einrichtung zur Erzeugung von SK
- 9: Begrenzer
- 10: Gehäuse

## Patentansprüche

1. Verfahren zum Schutz von Computer-Software und/oder computerlesbaren Daten gegen unberechtigte Nutzung, umfassend die Schritte
- Verschlüsselung der Software bzw. Daten durch den Lizenzgeber in Abhängigkeit von Lizenzparametern, enthaltend einem dem Lizenzgeber zugeordneten Firm Code (FC) und einem vom Lizenzgeber der Software bzw. den Daten zugeteilten User Code (UC), welche zusammen die Verschlüsselung initiieren;
- Speichern der verschlüsselten Software bzw. Daten auf einem Datenträger des Lizenznehmers;
- Verschlüsselte Übertragung der Lizenzparameter vom Lizenzgeber an den Lizenznehmer;
- Speichern der Lizenzparameter in einem nichtflüchtigen Speicher des Lizenznehmers;
- Automatische Entschlüsselung der Software bzw. Daten mittels eines Entschlüsselers in Abhängigkeit der eingespeicherten Lizenzparameter während der Nutzung der Software bzw. Daten durch den Lizenznehmer;
**dadurch gekennzeichnet, dass**
- die Verschlüsselung der Software bzw. Daten initialisiert wird in Abhängigkeit eines vom Lizenzgeber frei gewählten geheimen Firm Key (FK);
- die Verschlüsselung der Übertragung der Lizenzparameter in Abhängigkeit eines geheimen Private Serial Key (SK) erfolgt;
- die Entschlüsselung der Software bzw. Daten initialisiert wird in Abhängigkeit des vom Lizenzgeber gewählten Firm Key (FK).

2. Verfahren nach Anspruch 1, **dadurch gekennzeichnet, dass** der geheime Private Serial Key (SK) beim Lizenznehmer zufällig erzeugt wird, ohne dass der Lizenznehmer, der Lizenzgeber oder irgendein Anderer darauf Einfluss nehmen kann.

3. Verfahren nach Anspruch 1 oder 2, **dadurch gekennzeichnet, dass** die Signatur der Übertragung der Lizenzparameter vom Lizenzgeber zum Lizenznehmer in Abhängigkeit einer dem Lizenznehmer fest zugeordneten einzigartigen Serial Number (SN) erfolgt.

4. Verfahren nach einem der Ansprüche 1 bis 3, **dadurch gekennzeichnet, dass**
- dem Lizenzgeber ein geheimer Firm Common Key (FCK) zugeordnet ist, welcher aus einem Common Key (CK) durch Verschlüsselung in Abhängigkeit des Firm Codes (FC) des Lizenzgebers erzeugt wird;
- das Anlegen, Ändern oder Löschen der Lizenzparameter in Abhängigkeit des Firm Common Key (FCK) erfolgt.

5. Verfahren nach einem der Ansprüche 1 bis 4, **dadurch gekennzeichnet, dass** die Speicherung der Lizenzparameter innerhalb eines als Hardware-Zusatz ausgebildeten Schutzgeräts (3) erfolgt.

6. Verfahren nach Anspruch 5, **dadurch gekennzeichnet, dass** die automatische Entschlüsselung der geschützten Software bzw. Daten mittels eines innerhalb des Schutzgeräts (3) angeordneten Ver- und Entschlüsselers (7) erfolgt.

7. Verfahren nach Anspruch 5 oder 6, **dadurch gekennzeichnet, dass** das Schutzgerät (3) einen manipulationssicheren Begrenzer (9) enthält, welcher den Zeitraum und/oder die Anzahl der Entschlüsselungen der geschützten Software bzw. Daten begrenzt.

8. Verfahren nach einem der Ansprüche 5 bis 7, **dadurch gekennzeichnet, dass**
- in das Schutzgerät (3) ein vom Hersteller festgelegter geheimer Private Box Key (BK) eingespeichert wird;
- die Verschlüsselung der Übertragung von Lizenzparametern zwischen Lizenzgeber und Lizenznehmer in Abhängigkeit dieses Private Box Key (BK) erfolgt.

9. Schutzgerät zur Verwendung bei dem Verfahren nach Anspruch 1, mit
- einer Schnittstelle (4) zum Anschluss an den Computer (2) des Lizenznehmers;
- einem Mikroprozessor (5);
- einem nichtflüchtigen Speicher (6), in dem die Lizenzparameter eingespeichert sind;
- einem Ver- und Entschlüsseler (7) zur automatischen Entschlüsselung der Software bzw. Daten in Abhängigkeit der eingespeicherten Lizenzparameter;
**gekennzeichnet durch**
- eine Einrichtung (8) zur Erzeugung eines zufälligen geheimen Private Serial Key (SK) zur Verschlüsselung der Übertragung der Lizenzparameter zwischen Lizenzgeber und Lizenznehmer.

10. Kopierschutz nach Anspruch 9, **dadurch gekennzeichnet, dass** der Speicher (6) mehrere Speicherbereiche (6a, 6b, 6c) für die Einspeicherung von Lizenzparametem verschiedener Lizenzgeber umfasst.

11. Kopierschutz nach Anspruch 9 oder 10, **dadurch gekennzeichnet, dass** der Mikroprozessor (5), der Speicher (6), der Ver-/Entschlüsseler (7) und die Einrichtung (8) zur Erzeugung des Private Serial Key (SK) auf einem einzigen integrierten Halbleiterschaltkreis (ASIC) ausgebildet sind.

12. Kopierschutz nach einem der Ansprüche 9 bis 11, **gekennzeichnet durch** einen manipulationssicheren Begrenzer (9), der den Zeitraum und/oder die Anzahl der Entschlüsselungen der geschützten Software bzw. Daten begrenzt.

## Claims

1. Method of protecting computer software and/or computer-readable data against unauthorised use, comprising the steps:
- encoding of the software or data by the licensor as a function of licence parameters containing a Firm Code (FC) assigned to the licensor and a User Code (UC) allocated by the licensor of the software or the data, which together initiate the encoding;
- storage of the encoded software or data on a data carrier of the licensee;
- encoded transmission of the licence parameters from the licensor to the licensee;
- storage of the licence parameters in a non-volatile memory of the licensee;
- automatic decoding of the software or data by means of a decoder as a function of the stored licence parameters during the use of the software or data by the licensee;
**characterised in that**
- the encoding of the software or data is initialised as a function of a secret Firm Key (FK) freely selected by the licensor;
- the encoding of the transmission of the licence parameters takes place as a function of a secret Private Serial Key (SK);
- the decoding of the software or data is initialised as a function of the Firm Key (FK) selected by the licensor.

2. Method as claimed in Claim 1, **characterised in that** the secret Private Serial Key (SK) is generated randomly at the licensee without the licensee, the licensor or anyone else being able to influence it.

3. Method as claimed in either Claim 1 or Claim 2, **characterised in that** the signature of the transmission of the licence parameters from the licensor to the licensee takes place as a function of a unique Serial Number (SN) firmly assigned to the licensee.

4. Method as claimed in any one of Claims 1 to 3, **characterised in that**
- the licensor is assigned a secret Firm Common Key (FCK), which is generated from a Common Key (CK) by encoding as a function of the Firm Code (FC) of the licensor;
- the installation, alteration or deletion of the licence parameters takes place as a function of the Firm Common Key (FCK).

5. Method as claimed in any one of Claims 1 to 4, **characterised in that** the storage of the licence parameters takes place within a protective device (3) developed as a hardware add-on.

6. Method as claimed in Claim 5, **characterised in that** the automatic decoding of the protected software or data takes place by means of an encoder and decoder (7) disposed within the protective device (3).

7. Method as claimed in either Claim 5 or Claim 6, **characterised in that** the protective device (3) contains a limiter (9) which is secure against manipulation and limits the time period and/or the number of decodings of the protected software or data.

8. Method as claimed in any one of Claims 5 to 7, **characterised in that**
- a secret Private Box Key (BK) which is fixed by the producer is stored in the protective device (3);
- the encoding of the transmission of licence parameters between the licensor and the licensee takes place as a function of this Private Box Key (BK).

9. Protective device for use in the method as claimed in Claim 1, with
- an interface (4) for connection to the licensee's computer (2);
- a microprocessor (5);
- a non-volatile memory (6) in which the licence parameters are stored;
- an encoder and decoder (7) for the automatic decoding of the software or data as a function of the stored licence parameters;
**characterised by**
- a means (8) for generating a random secret Private Serial Key (SK) for encoding the transmission of the licence parameters between the licensor and licensee.

10. Copy protection as claimed in Claim 9, **characterised in that** the memory (6) comprises a plurality of memory areas (6a, 6b, 6c) for the storage of licence parameters of different licensors.

11. Copy protection as claimed in either Claim 9 or Claim 10, **characterised in that** the microprocessor (5), the memory (6), the encoder/decoder (7), and the means (8) for the production of the Private Serial Key (SK) are constructed on a single integrated semiconductor circuit (ASIC).

12. Copy protection as claimed in any one of Claims 9 to 11, **characterised by** a limiter (9) which is secure against manipulation and limits the time period and/or the number of decodings of the protected software or data.

## Revendications

1. Procédé pour la protection de logiciels d'ordinateur et/ou de données lisibles par un ordinateur contre une utilisation illicite, comprenant les étapes:
- codage des logiciels et/ou des données par le bailleur de licence en fonction de paramètres de licence comprenant un Code de Société (FC) affecté au bailleur de licence et un Code d'Utilisateur (UC) attribué par le bailleur de licence des logiciels et/ou des données, lesquels initient ensemble le codage ;
- mise en mémoire des logiciels et/ou des données encodé(e)s sur un support de données du bénéficiaire de licence;
- transmission codée des paramètres de licence par le bailleur de licence au bénéficiaire de licence ;
- mise en mémoire des paramètres de licence dans une mémoire non volatile du bénéficiaire de licence ;
- décodage automatique des logiciels et/ou des données à l'aide d'un décodeur en fonction des paramètres de licence enregistrés pendant l'utilisation des logiciels et/ou des données par le bénéficiaire de licence ;
**caractérisé en ce que**
- le codage des logiciels et/ou des données est initialisé en fonction d'une Clé de Société (FK) secrète librement choisie par le bailleur de licence ;
- le codage de la transmission des paramètres de licence s'effectue en fonction d'une Clé de Série Privée (SK) secrète ;
- le décodage des logiciels et/ou des données est initialisé en fonction de la Clé de Société (FK) choisie par le bailleur de licence.

2. Procédé selon la revendication 1, **caractérisé en ce que** la Clé de Série Privée (SK) secrète est générée aléatoirement chez le bénéficiaire de licence, sans que le bénéficiaire de licence, le bailleur de licence ou qui que ce soit d'autre puisse avoir une influence dessus.

3. Procédé selon l'une des revendications 1 et 2, **caractérisé en ce que** la signature de la transmission des paramètres de licence par le bailleur de licence au bénéficiaire de licence s'effectue en fonction d'un Numéro de Série (SN) unique attribué de manière fixe au bénéficiaire de licence.

4. Procédé selon l'une des revendications 1 à 3, **caractérisé en ce que**
- une Clé Commune de Société (FCK) secrète est affectée au bailleur de licence, laquelle est générée à partir d'une Clé Commune (CK) par codage en fonction du Code de société (FC) du bailleur de licence ;
- la création, la modification ou la suppression des paramètres de licence s'effectuent en fonction de la Clé Commune de Société (FCK).

5. Procédé selon l'une des revendications 1 à 4, **caractérisé en ce que** la mise en mémoire des paramètres de licence s'effectue à l'intérieur d'un appareil de protection (3) réalisé en tant que dispositif matériel.

6. Procédé selon la revendication 5, **caractérisé en ce que** le décodage automatique des logiciels et/ou des données protégé(e)s s'effectue à l'aide d'un codeur et d'un décodeur (7) disposés à l'intérieur de l'appareil de protection (3).

7. Procédé selon l'une des revendications 5 et 6, **caractérisé en ce que** l'appareil de protection (3) comprend un délimiteur (9) résistant aux manipulations, lequel délimite l'intervalle de temps et/ou le nombre des codages des logiciels et/ou données protégé(e)s.

8. Procédé selon l'une des revendications 5 à 7, **caractérisé en ce que**
- une Clé de Boîte Privée (BK) secrète déterminée par le fabricant est mise en mémoire dans l'appareil de protection (3) ;
- le codage de la transmission des paramètres de licence entre le bailleur de licence et le bénéficiaire de licence s'effectue en fonction de cette Clé de Boîte Privée (BK).

9. Appareil de protection pour l'utilisation avec le procédé selon la revendication 1, avec
- une interface (4) pour la connexion à l'ordinateur (2) du bénéficiaire de licence ;
- un microprocesseur (5) ;
- une mémoire non volatile (6) dans laquelle les paramètres de licence sont mis en mémoire ;
- un codeur et un décodeur (7) pour le décodage automatique des logiciels et/ou données en fonction des paramètres de licence mis en mémoire ;
**caractérisé par**
- un dispositif (8) pour la génération d'une Clé de Série Privée (SK) secrète aléatoire pour le codage de la transmission des paramètres de licence entre le bailleur de licence et le bénéficiaire de licence.

10. Protection contre les copies selon la revendication 9, **caractérisée en ce que** la mémoire (6) comprend plusieurs zones de mémoire (6a, 6b, 6c) pour la mise en mémoire de paramètres de licence de plusieurs bailleurs de licence.

11. Protection contre les copies selon l'une des revendications 9 et 10, **caractérisée en ce que** le microprocesseur (5), la mémoire (6), le codeur/décodeur (7) et le dispositif (8) pour la génération de la Clé de Série Privée (SK) sont développés sur un unique circuit intégré spécifique à des applications (ASIC).

12. Protection contre les copies selon l'une quelconque des revendications 9 à 11, **caractérisée par** un délimiteur (9) résistant aux manipulations, lequel délimite l'intervalle de temps et/ou le nombre des décodages des logiciels et/ou données protégé(e)s.
